**Europäisches Patentamt**

**European Patent Office**

**Office européen des brevets**

(19)

(11) Veröffentlichungsnummer : **0 137 795
B1**

(12) **EUROPÄISCHE PATENTSCHRIFT**

(45) Veröffentlichungstag der Patentschrift :
23.12.87

(21) Anmeldenummer : 84900700.0

(22) Anmeldetag : 13.02.84

(86) Internationale Anmeldenummer :
PCT/AT 84/00004

(87) Internationale Veröffentlichungsnummer :
WO/8403064 (16.08.84 Gazette 84/20)

(51) Int. Cl.⁴ : **B 29 C 67/20**

(54) VERFAHREN ZUM KONTINUIERLICHEN HERSTELLEN VON SCHAUMSTOFFEN.

(30) Priorität : 11.02.83 AT 470/83

(43) Veröffentlichungstag der Anmeldung :
24.04.85 Patentblatt 85/17

(45) Bekanntmachung des Hinweises auf die Patenterteilung : 23.12.87 Patentblatt 87/52

(84) Benannte Vertragsstaaten :
AT BE CH DE FR GB LI NL SE

(56) Entgegenhaltungen :
GB-A- 588 617
GB-A- 1 098 471
GB-A- 1 116 349
GB-A- 1 221 481
US-A- 2 945 261
US-A- 3 081 269
US-A- 3 243 484
US-A- 3 863 908

(73) Patentinhaber : ISOVOLTA Österreichische Isolierstoffwerke Aktiengesellschaft
Industriezentrum-Süd
A-2351 Wiener Neudorf (AT)

(72) Erfinder : EICHBERGER, Walter
Max Margules-Weg 14
A-2380 Perchtoldsdorf (AT)
Erfinder : VALENTA, William
Erlaufstrasse 17/7
A-2344 Maria Enzersdorf (AT)
Erfinder : STAMPFER, Heinz
Erlaufstrasse 10/4
A-2344 Maria Enzersdorf (AT)

(74) Vertreter : Stampfer, Heinz
ISOVOLTA Österreichische Isolierstoffwerke AG
Industriezentrum-Süd
A-2351 Wiener Neudorf (AT)

## Beschreibung

Die Erfindung betrifft ein Verfahren zum kontinuierlichen Herstellen von Schaumstoffen, bei dem das gegebenenfalls bereits aufschäumende Kunststoffausgangsmaterial zunächst ein elektromagnetisches Hochfrequenzkondensatorfeld durchläuft, in welchem das Ausgangsmaterial dielektrische Verlustwärme aufnimmt und keilförmig aufschäumt, und das aufschäumende und/oder aufgeschäumte Material danach zwischen zwei umlaufenden endlosen Transportbändern abgezogen wird, zwischen denen es zu einer Schaumstoffschicht aushärtet.

Ein Verfahren dieser Art ist aus der GB-A-1 116 349 bekannt. Dieses Verfahren betrifft die kontinuierliche Herstellung eines Verbundmaterials, welches einen Kern aus Polyurethanschaum aufweist, der mit zwei insbesondere aus einem Asbestzementmaterial bestehenden Deckplatten verbunden ist. Zur Durchführung des Verfahrens werden die unteren Deckplatten auf eine sich bewegende Papierbahn aufgelegt und auf diese Platten dann die Polyurethanmasse aufgebracht, welche unmittelbar danach infolge der in ihr ablaufenden exothermen Reaktion keilförmig aufzuschäumen beginnt. Das Ganze durchläuft dann eine elektromagnetisch abgeschirmte Kammer, in welcher die oberen Deckplatten schräg von oben zugeführt werden, um sich schließlich mit der aufgeschäumten Polyurethanschicht zu verbinden. Innerhalb der Kammer sind an den Außenseiten der sich bewegenden unteren und oberen Deckplatten jeweils ein Paar von kammartig ineinandergreifenden Elektroden angeordnet, zwischen denen jeweils ein elektromagnetisches Hochfrequenzfeld herrscht, in welchem hauptsächlich die Deckplatten aber auch die aufschäumende Polyurethanmasse aufgeheizt wird, mit dem Ziel, eine bessere Verbindung der Deckplatten mit der Polyurethanschicht zu gewährleisten. Die mit den Deckplatten versehene aufgeschäumte Schicht wird dann zwischen zwei umlaufenden endlosen Transportbändern abgezogen, zwischen denen es zu einer Schaumstoffschicht aushärtet.

Der Erfindung liegt nun die Aufgabe zugrunde, ein Verfahren der eingangs genannten Art für Kunststoffschaummassen anzugeben, bei welchem im Ausgangsmaterial während des Aufschäumens jedoch keine exothermen Reaktionen stattfinden, bzw. die Exothermie solcher Reaktionen zu gering ist, um einen wesentlichen Teil der zum Aufschäumen benötigten Wärme zu liefern, und welcher mit einer relativ einfachen Vorrichtung auskommt.

Die der Erfindung zugrundeliegende Aufgabe wird in dem erfindungsgemäßen Verfahren gelöst, das dadurch gekennzeichnet ist, daß ein nicht vorgeschäumtes Ausgangsmaterial eingesetzt wird, welches einen Novolak einen Aldehyd-Donator, ein Treibmittel und einen Katalysator enthält, daß das aufschäumende Ausgangsmaterial zwischen einer unteren und einer oberen plattenförmigen Elektrode, zwischen denen das Hochfrequenzkondensatorfeld herrscht, hindurchgeführt wird und daß die endlosen Transportbänder durch die Preßbänder einer kontinuierlich arbeitenden Presse gebildet werden, wobei, zwecks zusätzlicher Wärmezufuhr in das aufschäumende und/oder aufgeschäumte Ausgangsmaterial oder zwecks Verhinderung oder Verzögerung einer oberfächigen Abkühlung desselben, zumindest die obere der beiden Elektroden und/oder zumindest eine der Preßflächen der Presse beheizt werden.

Aus der GB-A-1 221 481 ist zwar eine bandpressenartige Vorrichtung bekannt, die zur kontinuierlichen Herstellung von Schaumstoffen dient und bei welcher durch Einleiten von Heißluft in die Vorrichtung die Preßbänder auf erhöhter Temperatur gehalten werden, doch dient diese Vorrichtung zum Herstellung von Schaumstoffen aus vorgeschäumten Polystyrolpartikeln.

Schließlich wäre noch auf die GB-A-1 098 471 hinzuweisen, welche eine Vorrichtung zur kontinuierlichen Herstellung eines Verbundmaterials mit einem Polyurethanschaumkern beschreibt, die eine Bandpresse mit beheizten Preßbändern umfaßt ; doch sieht diese Vorrichtung keine Hochfrequenzheizung vor.

Gemäß vorteilhaften Ausgestaltungen des erfindungsgemäßen Verfahrens wird das Ausgangsmaterial dem Hochfrequenzkondensatorfeld vorteilhaft in vorgeheiztem Zustand zugeführt, wobei diese Vorheizung in vorteilhafter Weise zumindest zum Teil durch Infrarotstrahlung erfolgen kann.

Gemäß weiteren vorteilhaften Ausgestaltungen des erfindungsgemäßen Verfahrens kann das Ausgangsmaterial dem Hochfrequenzkondensatorfeld in Form einer Schmelze oder in Pulver- und/oder Granulatform zugeführt werden.

In einer noch weiteren vorteilhaften Ausgestaltung der Erfindung wird das im Hochfrequenzkondensatorfeld aufschäumende Ausgangsmaterial der Preßzone der kontinuierlich arbeitenden Presse innerhalb einer Hülle aus flächigem Material zugeführt. Dabei kann das Ausgangsmaterial auch vorteilhaft bereits dem Hochfrequenzkondensatorfeld innerhalb einer solchen Hülle zugeführt werden.

Nach einer anderen vorteilhaften Ausgestaltung des erfindungsgemäßen Verfahrens wird das Ausgangsmaterial in Form einer durch Mischen und Erhitzen erzeugten pastösen Masse eingesetzt, wobei dieses Mischen und Erhitzen vorteilhaft in einem Extruder erfolgen kann und man, gemäß einer vorteilhaften Variante, die pastöse Masse — vorzugsweise mit Hilfe eines Kalanders — kontinuierlich in eine Ausgangsmaterial-Schicht überführt.

Das erfindungsgemäße Verfahren sei nun anhand der Zeichnungen näher erläutert. Es zeigen jeweils in schematischer Darstellung :

Fig. 1 eine vorteilhafte Vorrichtung zur Durchführung des erfindungsgemäßen Verfahrens im Schnitt längs die Linie I-I in Fig. 2 ;

Fig. 2 einen Querschnitt durch die Vorrichung nach Fig. 1 längs die Linie II-II in Fig. 1, sowie
Fig. 3 eine Teildarstellung einer Variante der Vorrichtung nach Fig. 1 im Schnitt.

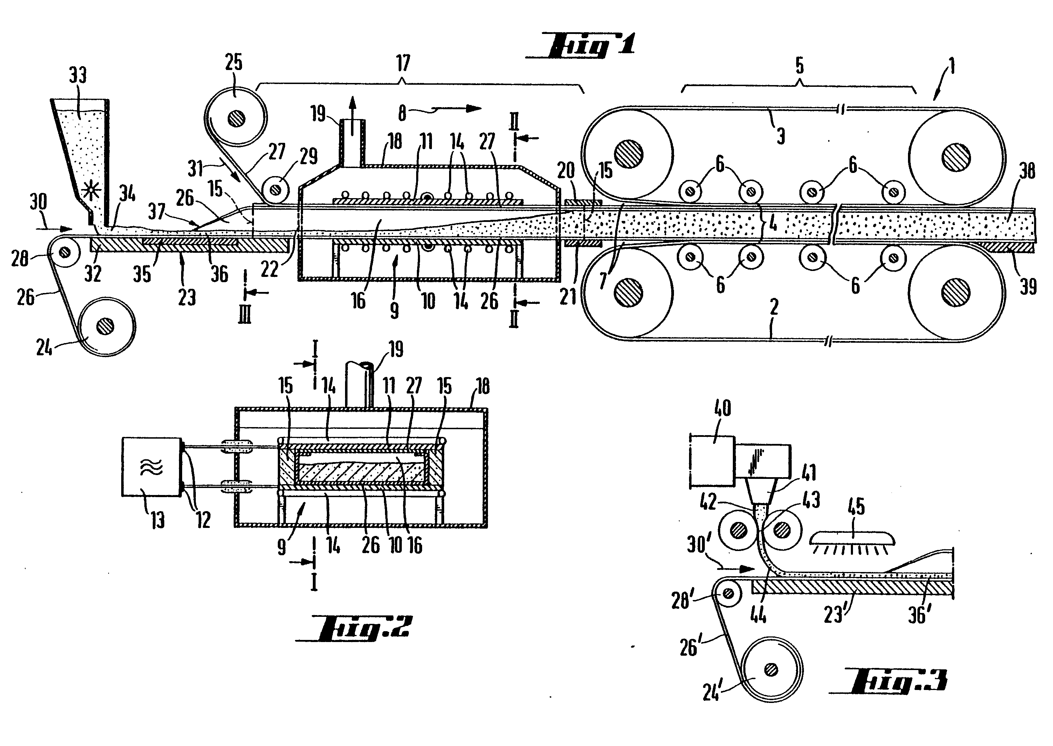

Die Vorrichtung gemäß Fig. 1 besteht aus einer Bandpresse 1 mit zwei beheizbaren endlosen Preßbändern 2 und 3, welche über eine Preßzone 4 einen Preßspalt 5 einschließen. Innerhalb dieser Preßzone 4 wird der Preßdruck in an sich bekannter Weise über Druckrollen 6 auf die Preßbänder 2 bzw. 3 übertragen. Die Bandpresse 1 fördert das ihr am Preßspalteingang 7 zugeführte Gut in Durchlaufrichtung 8. In Durchlaufrichtung 8 vor dem Preßspalteingang 7 ist eine Hochfrequenzheizvorrichtung 9 angeordnet, die plattenförmige Elektroden 10 und 11 aufweist, welche an dem Ausgang 12 eines Hochfrequenzgenerators 13 angeschlossen sind (Fig. 2). Die beiden Elektroden 10 und 11, die unabhängig voneinander mit Hilfe von Heizschlangen 14 beheizbar sind, werden durch zwei Randleisten 15 aus elektrisch isolierendem Material mit niedrigem dielektrischen Verlustfaktor auf Abstand gehalten, so daß die beiden Elektroden 10 und 11 und die beiden Randleisten 15 einen Heiztunnel 16 mit rechteckigem Querschnitt begrenzen, der zum Durchtritt des aufzuheizenden Gutes dient. Die Randleisten 15 erstrecken sich dabei über die Länge der Elektroden 10, 11 hinaus über den Bereich 17 und werden im Bereich der Bandpresse 1 durch (in den Figuren nicht dargestellte) seitliche Randleisten aus Stahl fortgesetzt, welche den Preßspalt 5 seitlich begrenzen. Die Hochfrequenzheizvorrichtung 9 weist ferner eine elektrische Abschirmung 18 auf, welche mit einem Abzug 19 versehen ist. Zur Überbrückung des Zwischenraumes zwischen der Hochfrequenzheizvorrichtung 9 und dem Preßspalteingang 7 sind zwei mit den Preßflächen der Bandpresse 1 fluchtend angeordnete beheizbare Gleitschuhe 20 und 21 vorgesehen.

Vor dem Eingang 22 der Hochfrequenzheizvorrichtung 9 ist ein mit 23 angedeuteter Zuführungstisch angeordnet sowie Vorratsrollen 24 und 25 zur Aufnahme von Hüllenmaterialbahnen 26 bzw. 27, welche über zugehörige Umlenkrollen 28 bzw. 29 in Richtung der Pfeile 30 bzw. 31 abgezogen werden. Über dem Anfang 32 des Zuführungstisches 23 ist eine Streuvorrichtung 33 angeordnet, die zum dosierten, kontinuierlichen Aufbringen eines pulverförmigen Kunststoffausgangsmaterials 34 auf die untere Hüllenmaterialbahn 26 dient, welche auf dem Zuführungstisch 23 gleitend, in Richtung des Pfeiles 30 abgezogen wird. Eine im Zuführungstisch 23 eingelassene Heizplatte 35 dient zum Vorheizen des Kunststoffausgangsmaterials 34 vor seinem Eintritt in die Hochfrequenzheizvorrichtung 9.

Zum Herstellen eines Schaumstoffes mit der anhand der Figuren 1 und 2 beschriebenen Vorrichtung wird das pulverförmige ein Treibmittel enthaltende Ausgangsmaterial 34, auf Basis eines hitzehärtenden duromeren Kunststoffes, mit Hilfe der Streuvorrichtung 33 auf die sich in Richtung des Pfeiles 30 bewegende, z. B. aus Natronkraftpapier bestehende, untere Hüllenmaterialbahn 26 kontinuierlich und dosiert aufgestreut. Die aufgestreute Ausgangsmaterialschicht wird in der Folge durch Wärmezufuhr aus der Heizplatte 35 bei einer Temperatur, die unter der Aufschäumtemperatur des Ausgangsmaterials 34 liegt, in eine schichtförmige Schmelze 36 übergeführt. Kurz nach dem Aufstreuen des Ausgangsmaterials werden mit Hilfe einer üblichen, in den Figuren nicht dargestellten Vorrichtung an beiden Rändern der unteren Hüllenmaterialbahn 26 — wie bei 37 angedeutet — kontinuierlich zunächst senkrecht aufgefaltet und danach an der Oberseite des herzustellenden plattenförmigen Schaumstoffkörpers an beiden Rändern in zwei Randstreifen wieder in die Horizontale umgeschlagen, so daß sich die in Fig. 2 dargestellte Form für die untere Hüllenmaterialbahn 26 ergibt. Diese die Ausgangsmaterial-Schmelze 36 tragende aufgefaltete Hüllenmaterialbahn 26 wird nun gemeinsam mit der oberen Hüllenmaterialbann 27, die ebenfalls aus Natronkraftpapier bestehen kann, kontinuierlich dem Eingang 22 der Hochfrequenzheizvorricht 9 zugeführt, wobei die obere Hüllenmaterialbahn 27 im gespannten Zustand so durch den Heiztunnel 16 geführt wird, daß sie an der Unterseite der oberen Elektrode 11 gleitet.

Innerhalb des Heiztunnels 16 herrscht ein elektromagnetisches Hochfrequenzkondensatorfeld, das in der durch den Heiztunnel 16 transportierten Ausgangsmaterial-Schmelze 36 eine dielektrische Verlustwärme erzeugt, was zu einem raschen und gleichmäßigen Temperaturanstieg im Ausgangsmaterial führt, welches dann keilförmig aufschäumt. Bei manchen Ausgangsmaterialien wird dieser Temperaturanstieg durch die Exothermie der einsetzenden Härtungsreaktion noch beschleunigt. Durch die Beheizung der Elektroden 10 und 11 wird ein oberflächiger Wärmeverlust aus dem aufschäumenden Material vermieden. Die Hochfrequenzspannung und die Durchlaufgeschwindigkeit des Materials durch die Vorrichtung werden nun so aufeinander abgstimmt, daß das aufschäumende Material die durch die beiden Hüllenmaterialbahnen 26 und 27 gebildete Hülle erst an einer Stelle vollständig ausfüllt, die etwa zwischen den beiden beheizten Gleitschuhen 20 bzw. 21 und dem Preßspalteingang 7 liegt. Solange das gegen diese Hülle aufschäumende Material noch weich ist, übt es auf die Hülleninnenfläche nur einen geringen Druck aus, der sich über die nachgiebigen Hüllenmaterialbahnen 26, 27 auf die zur Führung der Hülle dienenden feststehenden Flächen z. B. auf die Oberflächen der beheizten Gleitschuhe 20 bzw. 21 überträgt. Wegen dieses nur geringen Anpreßdrukkes wird ein Gleiten der Hülle an ihren feststehenden Führungsflächen aber kaum behindert.

Die mit dem noch weichen aufgeschäumten Material gefüllte Hülle passiert nun die Preßzone 4 der Bandpresse, in welcher der Innendruck des Schaumes zunächst ansteigt und der Schaum in der Folge zu einem Kunststoffschaumkörper aushärtet. Durch die beheizten Gleitschuhe 20, 21 und die beheizten Preßbänder 2, 3 wird eine oberflächige Abkühlung des Kunststoffschaumes gegen Ende des Aufschäumens bzw. während des Aushärtens verhindert oder zumindest verzögert. Der fertig ausgehärtete Schaumstoffkörper 38 tritt schließlich am Ausgang der Bandpresse 1 aus und wird auf dem mit 39 angedeuteten Tisch abgeführt und in der Folge an den Rändern besäumt und in Einzelstücke unterteilt.

Die Fig. 3 zeigt eine Variante der Vorrichtung gemäß Fig. 1 mit einer geänderten Ausgangsmaterialzuführung. Der in Fig. 1 links von der Linie III dargestellte Vorrichtungsteil ist bei dieser Variante durch den in Fig. 3 dargestellten Vorrichtungsteil ersetzt.

Bei dieser Variante wird das z. B. pulverförmig vorliegende Ausgangsmaterial in einen Extruder, dessen Extrusionskopf in Fig. 3 mit 40 bezeichnet ist, gemischt und erhitzt und durch die Düse 41 in Form eines pastösen Stranges 42 extrudiert. Dieser Strang 42 wird danach in einem Kalanderwalzenspalt 43 zu einem Band 44 gleichmäßiger Dicke geformt und kontinuierlich einer unteren Hüllenmaterialbahn 26' zugeführt, die — von einer Vorratsrolle 24' über eine Umlenkrolle 28' abgezogen — auf einem Zuführungstisch 23' gleitend in Richtung des Pfeiles 30' bewegt wird. Über dem Zuführungstisch 23' ist eine Infrarotstrahlungsquelle 45 vorgesehen, welche das bandförmige pastöse Ausgangsmaterial in eine schichtförmige Schmelze 36' überführt, welche in der Folge — analog wie gemäß Fig. 1 — als Ausgangsmaterial zur Herstellung des Schaumstoffkörpers dient.

Das erfindungsgemäße Verfahren ist zur Herstellung von Kunststoffschaumstoffen bestimmt, bei welchem im Ausgangsmaterial während seines Aufschäumens keine exothermen Reaktionen stattfinden, bzw. die Exothermie solcher Reaktionen zu gering ist, um einen wesentlichen Teil der zum Aufschäumen benötigten Wärme zu liefern.

Zur Herstellung von Phenolformaldehyd-Schaumstoffen ist es bekannt, von einem wasserlöslichen Resol auszugehen, wobei die Härtung unter stark sauren Bedingungen erfolgen muß. Bei diesem Harzsystem ist die Härtungsreaktion stark exotherm, sodaß das Aufschäumen keine Probleme macht. Die in diesem System enthaltene Säure kann aus dem fertigen Schaum nun nicht mehr entfernt werden, sodaß die Oberflächen der fertigen Schaumstoffplatten korrosiv sind, was man bei der Verwendung als Einschränkung berücksichtigen muß. Diese Schäume haben überdies den Nachteil, daß bei ihrer Herstellung aus der aufschäumenden und aushärtenden Masse relativ viel Wasser abgeführt werden muß. Das ist wahrscheinlich ein Grund dafür, daß in solchen Schäumen ein hoher Prozentsatz an geschlosenen Poren nicht oder nur sehr schwierig erzielt werden kann.

Seit einigen Jahren sind nun Phenolformaldehydharz-Schaumstoffsysteme bekannt, bei deren Herstellung ein Ausgangsmaterial eingesetzt wird, welches Novolak, Hexamethylentetramin und ein Treibmittel enthält, wobei die Härtung leicht basisch erfolgt. Bei der Erhitzung des Ausgangsmaterials zerfällt Hexamethylentetramin in Formaldehyd und Ammoniak, wobei letzterer teils als Katalysator, teils als gasförmiges Treibmittel dient. Ein solches System ist z. B. in der US-PS-3 081 269 beschrieben. Wegen des wasserfreien Ausgangsmaterials müssen hier beim Aufschäumen und Aushärten im wesentlichen nur die bei der Kondensationsreaktion freiwerdenden Wassermengen abgeführt werden, wodurch man bei solchen Schäumen auf Novolakbasis meist unschwer einen relativ hohen Prozentsatz an geschlossenen Poren erzielt.

Ein Nachteil bei der Herstellung solcher Schäume auf die Novolak-Basis liegt aber darin, daß die Exothermie bei der Aushärtungsreaktion nicht ausreicht, um den Schaum ohne zusätzliche Wärmezufuhr auszuhärten. Wegen der geringen thermischen Leitfähigkeit des Schaumes kann man diesem aber nach dem Aufschäumen Wärme nur mehr sehr langsam zuführen, was zu relativ langen Aushärtezeiten führt, welche in vielen Fällen einer wirtschaftlichen Herstellung im Wege stehen. Dieser Nachteil wird bei dem erfindungsgemäßen Verfahren vermieden.

Nachstehend wird als bevorzugter Ausführungsweg des erfindungsgemäßen Verfahrens die kontinuierliche Herstellung von Phenol-Aldehydharz-Schaumstoffkörpern mit Hilfe des anhand der Figuren 1 und 2 erläuterten Verfahrens näher beschrieben.

Als Ausgangsmaterial werden

1 000 Gew. Teile Novolak-Netzmittel-Gemisch,
  150 Gew. Teile Hexamethylentetramin als Formaldehyd-Donator
   50 Gew. Teile Azo-Isobutyronitryl als Treibmittel und
  150 Gew. Teile Aluminiumhydroxid als Füllstoff

jeweils in Pulverform mit Teilchengrößen kleiner als 0,25 mm gleichmäßig miteinander vermischt und der Streuvorrichtung 33 zugeführt.

Zur Herstellung der Schaumstoffkörper wird bei laufender Bandpresse 1 das pulverförmige Ausgangsmaterial mit Hilfe der Streuvorrichtung 33 auf eine als untere Hüllenmaterialbahn 26 dienende Kraftpapierbahn in einer gleichmäßigen Schicht aufgestreut und diese Schicht durch Wärmeaufnahme aus der Heizplatte 35 in eine Schmelze 36 übergeführt, die dann Temperaturen zwischen 90 und 100 °C aufweist. Nach Auffaltung der unteren Hüllenmaterialbahn 26 und Zuführung einer als obere Hüllenmaterialbahn 27 dienenden weiteren Kraftpapierbahn wird die Schmelze 36 im Heiztunnel 16 in dem zwischen den Elektroden 10 und 11 herrschenden elektromagnetischen Hochfrequenzkondensatorfeld aufgeheizt, wobei das Hexamethylentetramin in Formaldehyd und Ammoniak und das Azo-Isobutyronitryl in seine gasförmigen Zersetzungsprodukte zerfällt, das Material dadurch keilförmig aufgeschäumt und schließlich eine Temperatur zwischen 150 und 165 °C erreicht. Durch Wärmezufuhr aus den Elektroden 10, 11, die ständig auf einer Temperatur zwischen 150 und 165 °C gehalten werden, wird die Aufheizung des aufschäumenden Materials, wenn auch nur im geringen Maße, noch unterstützt.

Dadurch daß die beheizten Gleitschuhe 20, 21, sowie die Preßbänder 2, 3 der Bandpresse 1 ebenfalls auf derselben Temperatur zwischen 150 und 165 °C gehalten werden, erreicht man, daß das aufschäumende bzw. in weiterer Folge aufgeschäumte Material während des Aushärtens beim Durchtritt durch

**0 137 795**

die Bandpresse 1 über seinen gesamten Querschnitt etwa die gleiche optimale Aushärtungstemperatur hält.

Bei einem vorteilhaften Herstellungsbeispiel werden Phenolformaldehydharz-Schaumstoffplatten einer Dicke von 5 cm und einem Raumgewicht von 30 kg/m³ unter folgenden Verfahrensbedingungen erzeugt :

| | |
|---|---|
| Hochfrequenzspannung | 4 kV bei 13,56 MHz |
| Elektrodenabstand | 5 cm |
| Elektrodenlänge | 1,20 m |
| Länge der Preßzone 4 | 6,0 m |
| Materialverschub durch die Bandpresse ca. | 1 m/min |

Die anhand von Fig. 3 beschriebene Verfahrensvariante hat den Vorteil, daß bei ihr nicht mit einer leicht staubenden Pulvermischung als Ausgangsmaterial gearbeitet wird, bei der oft die Gefahr einer Entmischung besteht. Diese Verfahrensvariante hat insbesondere auch beim Einsatz eines ein Novolak-Netzmittelgemisch enthaltenden Ausgangsmaterials den Vorteil, daß dieses gesondert herzustellende Gemisch nicht auf eine bestimmte Korngröße gemahlen werden muß und daß auch die Korngrößen bzw. die Korngrößenverteilungen der anderen Komponenten des Ausgangsmaterials nicht sehr kritisch sind.

Durch das erfindungsgemäße Verfahren wird das kontinuierliche Herstellen von Kunststoffschaumstoffen auf Basis von Novolak, die insbesondere als thermische Isoliermaterialien eingesetzt werden, gegenüber bekannten Verfahren wesentlich vereinfacht.

**Patentansprüche**

1. Verfahren zum kontinuierlichen Herstellen von Schaumstoffen, bei dem das gegebenenfalls bereits aufschäumende Kunststoffausgangsmaterial zunächst ein elektromagnetisches Hochfrequenzkondensatorfeld durchläuft, in welchem das Ausgangsmaterial dielektrische Verlustwärme aufnimmt und keilförmig aufschäumt, und das aufschäumende und/oder aufgeschäumte Material danach zwischen zwei umlaufenden endlosen Transportbändern abgezogen wird, zwischen denen es zu einer Schaumstoffschicht aushärtet, dadurch gekennzeichnet, daß ein nicht vorgeschäumtes Ausgangsmaterial eingesetzt wird, welches einen Novolak, einen Aldehyd-Donator, ein Treibmittel und einen Katalysator enthält, daß das aufschäumende Ausgangsmaterial zwischen einer unteren und einer oberen plattenförmigen Elektrode (10, 11), zwischen denen das Hochfrequenzkondensatorfeld herrscht, hindurchgeführt wird und daß die endlosen Transportbänder durch die Preßbänder einer kontinuierlich arbeitenden Presse gebildet werden, wobei, zwecks zusätzlicher Wärmezufuhr in das aufschäumende und/oder aufgeschäumte Ausgangsmaterial oder zwecks Verhinderung oder Verzögerung einer oberflächigen Abkühlung desselben, zumindest die obere der beiden Elektroden (10, 11) und/oder zumindest eine der Preßflächen der Presse beheizt werden.

2. Verfahren nach Anspruch 1, dadurch gekennzeichnet, daß das Ausgangsmaterial dem Hochfrequenzkondensatorfeld in vorgeheiztem Zustand zugeführt wird.

3. Verfahren nach Anspruch 2, dadurch gekennzeichnet, daß die Vorheizung zumindest zum Teil durch Infrarotstrahlung erfolgt.

4. Verfahren nach Anspruch 2 oder 3, dadurch gekennzeichnet, daß das Ausgangsmaterial dem Hochfrequenzkondensatorfeld in Form einer Schmelze (36, 36') zugeführt wird.

5. Verfahren nach einem der Ansprüche 1 bis 3, dadurch gekennzeichnet, daß das Ausgangsmaterial dem Hochfrequenzkondensatorfeld in Pulver- und/oder Granulatform zugeführt wird.

6. Verfahren nach einem der Ansprüche 1 bis 5, dadurch gekennzeichnet, daß das im Hochfrequenzkondensatorfeld aufschäumende Ausgangsmaterial der Preßzone der kontinuierlich arbeitenden Presse innerhalb einer Hülle aus flächigem Material zugeführt wird.

7. Verfahren nach Anspruch 6, dadurch gekennzeichnet, daß das Ausgangsmaterial bereits dem Hochfrequenzkondensatorfeld innerhalb einer solchen Hülle (26, 26', 27) zugeführt wird.

8. Verfahren nach einem der Ansprüche 1 bis 7, dadurch gekennzeichnet, daß das Ausgangsmaterial in Form einer durch Mischen und Erhitzen erzeugten pastösen Masse eingesetzt wird.

9. Verfahren nach Anspruch 8, dadurch gekennzeichnet, daß das Mischen und Erhitzen des Ausgangsmaterials in einem Extruder erfolgt.

10. Verfahren nach Anspruch 9, dadurch gekennzeichnet, daß man die extrudierte pastöse Masse — vorzugsweise mit Hilfe eines Kalanders — kontinuierlich in eine Ausgangsmaterial-Schicht überführt.

**Claims**

1. Method for the continuous production of foam materials, in which the synthetic starting material, which may if necessary already be foaming, firstly passes through an electromagnetic high frequency condenser field, in which the starting material takes up dielectric loss heat and foams in wedge-shaped

5

manner, and the foaming and/or foamed material is then drawn off·between two revolving continuous conveyor belts, between which it hardens to a foam layer, characterized in that a starting material is used which is not prefoamed, which contains a Novolak, an aldehyde donor, a foaming agent and a catalyst, that the foaming starting materialis passed through between a lower and an upper plate-shaped electrode (10, 11) between which the high frequency condenser field prevails, and that the continuous conveyor belts are formed by the pressure bands of a continuously operating press, whereby, for the purpose of an additional supply of heat into the foaming and/or foamed starting material or for the purpose of preventing or delaying a surface cooling of same, at least the upper of the two electrodes (10, 11) and/or at least one of the pressing surfaces of the press are heated.

2. Method according to Claim 1, characterized in that the starting material is fed to the high frequency condenser field in a preheated state.

3. Method according to Claim 2, characterized in that the preheating is effected at least partially by infrared radiation.

4. Method according to Claim 2 or 3, characterized in that the starting material is fed to the high frequency condenser field in the form of a melt (36, 36').

5. Method according to one of Claims 1 to 3, characterized in that the starting material is fed to the high frequency condenser field in a powder- and/or granulate form.

6. Method according to one of Claims 1 to 5, characterized in that the starting material foaming in the high frequency condenser field is fed within a sheath of laminar material to the pressure zone of the continuously operating press.

7. Method according to Claim 6, characterized in that the starting material is fed already within such a sheath (26, 26', 27) to the high frequency condenser field.

8. Method according to one of Claims 1 to 7, characterized in that the starting material is applied in the form of a pasty substance produced through mixing and heating.

9. Method according to Claim 8, characterized in that the mixing and heating of the starting material takes place in an extruder.

10. Method according to Claim 9, characterized in that the extruded pasty substance is converted continuously into a layer of starting material, preferably with the aid of a calender.

## Revendications

1. Procédé de fabrication en continu de matériau mousse, selon lequel le matériau de départ en matière plastique éventuellement déjà moussant traverse d'abord le champ électromagnétique d'un condensateur à haute fréquence, dans lequel le matériau de départ subit un échauffement par pertes diélectriques et mousse en forme de coin, et le matériau moussant et/ou ayant déjà moussé est tiré ensuite entre deux bandes transporteuses sans fin, entre lesquelles il se durcit en une couche de matériau mousse, caractérisé en ce qu'on introduit un matériau de départ non moussé préalable contenant une Novolac, un donneur d'aldéhydes, un agent de moussage et un catalyseur, en ce que le matériau de départ en train de mousser est conduit entre deux électrodes inférieure et supérieure (10, 11) en forme de plaques, entre lesquelles règne le champ d'un condensateur à haute fréquence et en ce que les bandes transporteuses sans fin sont formées par les bandes presseuses d'une presse travaillant en continu, et en ce qu'afin d'assurer une arrivée de chaleur supplémentaire dans le produit de départ moussant et/ou ayant déjà moussé ou de stopper ou retarder son refroidissement superficiel, on chauffe au moins l'électrode supérieure des deux électrodes (10, 11) et/ou au moins une des surfaces de la presse.

2. Procédé selon la revendication 1, caractérisé en ce que le matériau de départ est amené dans le champ du condensateur à haute fréquence à l'état préchauffé.

3. Procédé selon la revendication 2, caractérisé en ce que le préchauffage se fait au moins partiellement par un rayonnement infrarouge.

4. Procédé selon la revendication 2 ou 3, caractérisé en ce que le matériau de départ est amené dans le champ du condensateur à haute fréquence sous la forme d'une masse fondue (36, 36').

5. Procédé selon l'une quelconque des revendications 1 à 3, caractérisé en ce que le matériau de départ est amené dans le champ du condensateur à haute fréquence sous la forme de poudre et/ou de granulé.

6. Procédé selon l'une quelconque des revendications 1 à 5, caractérisé en ce que le matériau de départ moussant dans le champ du condensateur à haute fréquence est amené dans la zone de pressage de la presse travaillant en continu à l'intérieur d'une gaine en matériau plat.

7. Procédé selon la revendication 6, caractérisé en ce que le matériau de départ est déjà amené dans le champ du condensateur à haute fréquence à l'intérieur d'une telle gaine (26, 26', 27).

8. Procédé selon l'une quelconque des revendications 1 à 7, caractérisé en ce que le matériau de départ est introduit sous la forme d'une masse pâteuse produite par mélange et chauffage.

9. Procédé selon la revendication 8, caractérisé en ce que le mélange et le chauffage du matériau de départ s'opère dans une extrudeuse.

10. Procédé selon la revendication 9, caractérisé en ce que l'on convertit la masse pâteuse extrudée, de préférence à l'aide d'une calandre, de façon continue en une couche de matériau de départ.